# EUROPÄISCHE PATENTANMELDUNG

(11) **EP 1 878 366 A2**
(43) Veröffentlichungstag der Anmeldung: **16.01.2008**
(21) Anmeldenummer: 07010295.9
(22) Anmeldetag: 23.05.2007
(51) Int. Cl.: A47G 19/02, A47J 43/07

(54) **Gefäss, insbesondere Schüssel für Koch-, Anricht-, Aufbewahrungs- oder/und Servierzwecke und Deckel für ein solches Gefäss**

(30) Priorität: 23.06.2006 DE 102006028980
(71) Anmelder: Metallwarenfabrik Marktoberdorf GmbH & Co. KG, 87616 Marktoberdorf (DE)
(72) Erfinder: Eurisch, Johannes, 87674 Immerhofen (DE)
(74) Vertreter: Tiesmeyer, Johannes

(57) **Zusammenfassung**

Die Erfindung betrifft ein Gefäß, insbesondere eine Schüssel für Koch-, Anricht-, Aufbewahrungs- oder/und Servierzwecke, mit einer steilen Umfangswand (3), die im Bereich ihres den oberen Gefäßrand (6) aufweisenden Endes in eine nach außen gebördelte Zone (7) geringerer Steilheit übergeht, wobei die Größe der nach außen gebördelten Zone (7), insbesondere deren in Draufsicht von oben betrachtete radiale Breite, entlang des Umfangs des Gefäßes (1) variiert. Gegenstand der Erfindung ist ferner ein Deckel für ein solches Gefäß.

## Beschreibung

Die Erfindung betrifft ein Gefäß, insbesondere eine Schüssel für Koch-, Anricht-, Aufbewahrungs- oder/und Servierzwecke, mit einer steilen Umfangswand, die im Bereich ihres den oberen Gefäßrand aufweisenden Endes in eine nach außen gebördelte Zone geringerer Steilheit übergeht.

Gefäße dieser Art sind weit verbreitet und z. B. als Schüsseln oder Töpfe Gegenstände des alltäglichen Gebrauchs im Haushalt. Derartige Gefäße können aus verschiedenen Materialien oder Materialkombinationen, wie etwa aus Edelstahl, Keramik oder Kunststoff bestehen.

Der Erfindung liegt die Aufgabe zugrunde, ein Gefäß der eingangs genannten Art bereitzustellen, welches als Ausschütt-Dosiergefäß für flüssige Materialien unterschiedlicher Viskositäten, aber auch als Aufbewahrungsgefäß gut geeignet ist und ein ansprechendes Design aufweist.

Zur Lösung dieser Aufgabe wird erfindungsgemäß vorgeschlagen, dass die Größe der nach außen gebördelten Zone, insbesondere deren in Draufsicht von oben betrachtete radiale Breite, entlang des Umfangs des Gefäßes variiert. Unter "nach außen gebördelt" soll in der Terminologie dieser Anmeldung die von einer Zone größerer Steilheit in eine Zone geringerer Steilheit übergehende Randformgestaltung des oberen Gefäßbereichs verstanden werden und nicht eine Schutzbereichsbeschränkung auf das Bördeln als zur Herstellung verwendetes Formgebungsverfahren zwingend abgeleitet werden. Was das Formgebungsverfahren anbetrifft, so wird die nach außen gebördelte Zone gemäß einer bevorzugten Herstellungsvariante durch einen Tiefziehprozess hergestellt. Vorzugsweise erstreckt sich die nach außen gebördelte Zone variierender Größe in Gefäßumfangsrichtung über mehr als die Hälfte der Umfangslänge des Gefäßes, insbesondere über die gesamte Umfangslänge des Gefäßes, wobei die Größe der nach außen gebördelten Zone, insbesondere deren - in Draufsicht von oben betrachtete - radiale Breite, entlang des Umfangs des Gefäßes durchgehend kontinuierlich variiert. Die nach außen gebördelte Zone bildet einen Schüttrand variierender Breite. Zum dosierten Ausschütten zähflüssiger Materialien empfiehlt es sich, das Gefäß so zu halten, dass das Material über den Bereich des Schüttrandes ausfließt, welcher die größte radiale Breite hat. Zum dosierten Ausgießen dünnflüssigerer Materialien empfiehlt es sich, das Gefäß so zu halten, dass das Material über den Bereich des Schüttrandes ausfließt, der die geringste radiale Breite hat. In dem vorstehend angesprochenen Sinne kann das Gefäß je nach Ausrichtung für ein optimiertes, rasches und gezieltes Ausgießen von Materialien unterschiedlicher Viskositäten genutzt werden. Der Rand der nach außen gebördelten Zone ist so gestaltet, dass er eine Abrisskante für die betreffende Flüssigkeit beim Ausgießen bildet.

Das Gefäß hat vorzugsweise eine runde, insbesondere kreisrunde Basisform unterhalb der nach außen gebördelten Zone.

Gemäß einer Ausführungsform der Erfindung verläuft die nach außen gebördelte Zone - in jedem vertikalen Radial-Längsschnitt betrachtet - näherungsweise geradlinig oder mit allenfalls geringer Krümmung nach außen.

Die Steilheit bzw. der Grad der Neigung der radial nach außen gebördelten Zone kann in einer Ausführungsvariante variieren und in einer anderen Ausführungsvariante - in jedem vertikalen Radial-Längsschnitt betrachtet - im Wesentlichen gleich sein.

Vorzugsweise ist das Gefäß und mithin die nach außen gebördelte Zone in Bezug auf eine vertikale Mittenebene des Gefäßes symmetrisch, wobei die vertikale Mittenebene die nach außen gebördelte Zone - jeweils in Draufsicht von oben betrachtet - an deren radial breitester Stelle und an deren radial schmalster Stelle schneidet.

Gemäß einer bevorzugten Ausführungsform der Erfindung nimmt die radiale Breite der nach außen gebördelten Zone von der schmalsten Stelle zu der breitesten Stelle kontinuierlich entlang des Umfangs des Gefäßes zu.

Vorzugsweise ist das Gefäß unterhalb der nach außen gebördelten Zone in Bezug auf eine Mittenachse rotationssymmetrisch, wie oben schon angedeutet, wobei auch die äußere Randkontur der nach außen gebördelten Zone rotationssymmetrisch ist und in Draufsicht einen Kreis beschreibt, dessen Zentrum jedoch relativ zu der Mittenachse seitlich versetzt ist. Eine solche Gestaltung ist herstellungstechnisch und unter Design-Gesichtspunkten vorteilhaft.

Bei einer abgewandelten Ausführungsform der letztgenannten Variante beschreibt die äußere Randkontur der nach außen gebördelten Zone eine Ellipse bzw. ein Oval.

Besonders vorteilhaft ist es, wenn die nach außen gebördelte Zone an ihrer radial breitesten Stelle groß genug ist, um einen Griffabschnitt zu bilden, der mit dem Daumen und dem Zeigefinger bzw. Mittelfinger einer Hand bequem ergriffen werden kann, so dass das Gefäß mit nur einer Hand sicher gehalten werden kann, etwa beim Ausgießen einer Flüssigkeit oder beim Umsetzen von einem Ort zu einem anderen Ort.

Vorzugsweise ist das Gefäß aus Edelstahl gebildet.

Gegenstand der Erfindung ist ferner ein Deckel für ein Gefäß, insbesondere ein Deckel für ein Gefäß nach einem der Patentansprüche 1-11, wobei der Deckel eine Deckelplatte und ein einstellbares Beflüftungsventil an der Deckelplatte aufweist. Erfindungsgemäß hat das Belüftungsventil ein Ventilschließelement, das zwischen einer Schließstellung und einer Maximalöffnungsstellung in einer Schließelementaufnahme bewegbar geführt ist, die wenigstens eine perforierte Belüftungszone aufweist, wobei das Ventilschließelement in dessen Schließstellung die Belüftungszone abdichtend überlappt, und wobei das Ventilschließelement aus der Schließstellung heraus mit Abnahme des Grades der Überlappung in seine Maximalöffnungsstellung bewegbar ist, in der es die perforierte Belüftungszone weitestgehend freigibt.

Ein solcher Deckel erlaubt verschiedene Belüftungseinstellungen des Belüftungsventils mit unterschiedlichem Belüftungsgrad. Das Belüftungsventil funktioniert zuverlässig und ist mit einfachen Mitteln herstellbar. Die Schließelementaufnahme stellt vorzugsweise eine Gleitverschiebeführung für das Ventilschließelement dar.

Vorzugsweise ist das Ventilschließelement um eine Drehachse drehbar in der Schließelementaufnahme gehalten, wobei es durch Drehen um die Drehachse zwischen der Schließstellung und der Maximalöffnungsstellung in einer vorzugsweise gleich bleibenden Ebene bewegbar ist, um den Grad der Überlappung zwischen Ventilschließelement und Belüftungszone entsprechend zu variieren.

Die Schließelementaufnahme umfasst gemäß einer bevorzugten Ausführungsform des erfindungsgemäßen Deckels eine Vertiefung, insbesondere Prägung in der Deckelplatte, wobei in dieser Vertiefung das Ventilschließelement so aufgenommen ist, dass es nicht über dem oberen Rand der Vertiefung nach außen absteht. Eine solche Gestaltung bietet den Vorteil, dass auf der Deckelplatte ein z. B. unten flacher Gegenstand aufgesetzt und so ein Stapel gebildet werden kann. Bei einem solchen flachen Gegenstand kann es sich z. B. um ein betreffendes Gefäß handeln.

Die Perforation der Belüftungszone ist vorzugsweise durch eine Vielzahl kleiner Löcher realisiert, deren Durchmesser kleiner als 1,7 mm, vorzugsweise kleiner als 1 mm ist. Die Löcher sollten jedenfalls so klein sein, dass Insekten, wie etwa kleine Obstfliegen/Fleischfliegen nicht durch die Löcher hindurch in das mit dem Deckel verschlossene Gefäß gelangen können. Bei den Löchern kann es sich z. B. um Rundlöcher handeln. Der erwünschte Effekt kann auch erzielt werden, wenn die Perforation der Belüftungszone durch längliche Belüftungsschlitze gebildet ist, deren Schlitzbreite entsprechend klein gewählt ist.

Gemäß einer Weiterbildung des erfindungsgemäßen Deckels weist die Belüftungszone Subbereiche unterschiedlicher Perforationsgrade auf, die in der Schließstellung des Ventilschließelements von diesem abdichtend überlappt sind und die bei Bewegung des Ventilschließelements in die Maximalöffnungsstellung nacheinander freigegeben werden. Die unterschiedlichen Perforationsgrade können durch unterschiedliche Lochgrößen und/oder durch unterschiedliche Anzahl von Löchern realisiert sein.

Bei einer besonders bevorzugten Ausführungsform des erfindungsgemäßen Deckels weist das Ventilschließelement wenigstens ein Elastomerdichtungselement auf, um die Belüftungszone in der Schließstellung des Ventilschließelements weitgehend luftdicht nach außen hin abzudichten.

Weiterhin ist es bevorzugt, dass die Deckelplatte an ihrer die Deckelunterseite definierenden Plattenseite eine Dichtungshalterung und einen daran insbesondere auswechselbar angeordneten Elastomerdichtungsring aufweist, der so dimensioniert ist, dass er bei bestimmungsgemäßer Anordnung des Deckels auf dem Gefäß an der Innenumfangsfläche des Gefäßes umlaufend dichtend anliegt. Vorzugsweise wird als Dichtungsring eine auswechselbar angeordnete Silikondichtung verwendet.

Gemäß einer Weiterbildung des Deckels nach der Erfindung weist er einen das Belüftungsventil enthaltenden radial inneren Deckelplattenbereich und einen relativ dazu nach oben versetzten, radial äußeren Randsaumbereich auf, mit dem er bei bestimmungsgemäßer Anordnung des Deckels auf dem Gefäß auf dem oberen Gefäßrand aufliegt. Der radial äußere Randsaumbereich begrenzt umlaufend eine den radial inneren Deckelbereich enthaltende Vertiefung, die so bemessen ist, dass ein variables, abrutschsicheres sowie Platz sparendes und Dichtungen schonendes Stapeln gleichartiger Deckel möglich ist.

Gegenstand der Erfindung ist weiterhin ein Set aus einem Gefäß nach einem der Patentansprüche 1 - 11 und einem Deckel nach einem der Patentansprüche 12 - 19. Vorzugsweise ist das Gefäß zum Zwecke des Stapelns auf den Deckel aufsetzbar und dabei mit seinem Boden in die von ihrem radial äußeren Randsaumbereich des Deckels umlaufend begrenzte, den radial inneren Deckelplattenbereich enthaltende Vertiefung einsetzbar, so dass ein abrutschsicheres Stapeln mehrerer gleichartiger Sets aus Gefäß und Deckel möglich ist, wobei in diesem Stapel ein von seinem Deckel abgedecktes Gefäß auf dem Deckel eines anderen gleichartigen Gefäßes aufsteht.

Die Erfindung wird nachstehend unter Bezugnahme auf die Figuren näher erläutert.
- Fig. 1: zeigt in einer Perspektivdarstellung ein als Schüssel ausgebildetes Gefäß nach der Erfindung.
- Fig. 2: zeigt die Schnittkontur der Schüssel aus Fig. 1 in der in Fig. 1 mit II gekennzeichneten Schnitt-Mittenebene.
- Fig. 3: zeigt die Schüssel aus Fig. 1 und Fig. 2 in der Draufsicht.
- Fig. 4 und Fig. 5: zeigen einen Deckel nach der Erfindung mit geöffnetem Belüftungsventil bzw. mit geschlossenem Belüftungsventil.
- Fig. 6: zeigt die schon in Fig. 2 dargestellte Schnittkontur der Schüssel aus Fig. 1 mit aufgesetztem Deckel aus Fig. 4 bzw. Fig. 5.
- Fig. 7: zeigt ein in Fig. 6 mit VII gekennzeichnetes Detail des Belüftungsventils in vergrößerter Darstellung.
- Fig. 8: zeigt das in Fig. 6 mit VIII gekennzeichnete Detail.
- Fig. 9: zeigt das in Fig. 6 mit IX gekennzeichnete Detail.
- Fig. 10: zeigt den Deckel aus Fig. 4 in der Draufsicht.

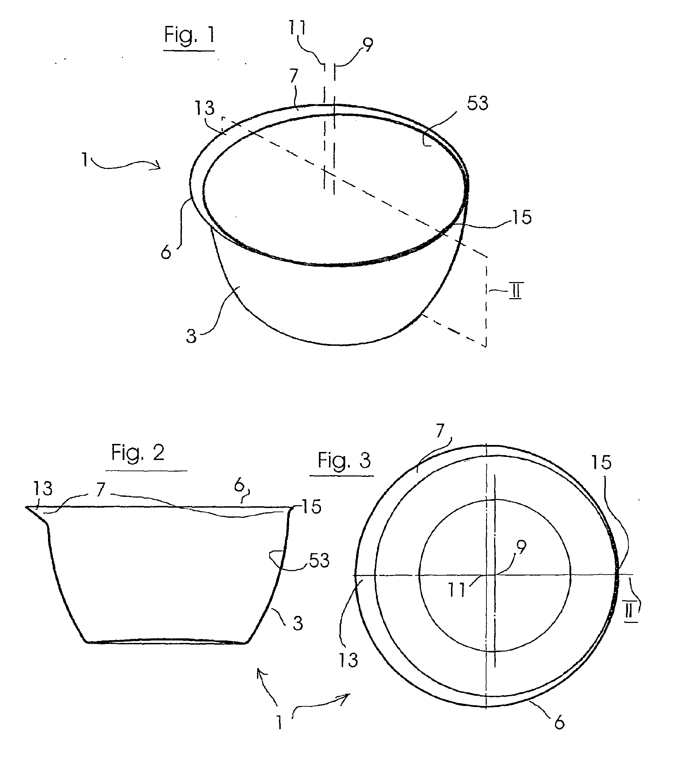

Die Schüssel 1 in Fig. 1 hat eine gekrümmte, relativ steile Umfangswand 3, die im Bereich ihres den oberen Schüsselrand 6 aufweisenden Endes in eine nach außen gebördelte Zone 7 geringerer Steilheit übergeht. Unterhalb dieser nach außen gebördelten Zone 7 ist die Schüssel 1 in Bezug auf die Zentralachse 9 rotationssymmetrisch, so dass ihre orthogonal zur Achse 9 verlaufenden Querschnitte Kreise bilden.

Wie aus Fig. 3 zu erkennen ist, ist auch die äußere Randkontur 6 der nach außen gebördelten Zone 7 rotationssymmetrisch, wobei sie in Draufsicht einen Kreis beschreibt, dessen Zentrum 11 jedoch relativ zu der Schüsselmittenachse 9 seitlich versetzt ist. Die Schüssel ist in Bezug auf die vertikale Mittenebene II symmetrisch aufgebaut, wobei die vertikale Mittenebene II die nach außen gebördelte Zone 7 bei 13 an deren radial breitester Stelle - und bei 15 an deren radial schmalster Stelle schneidet (vgl. die Schnittkontur in Fig. 2). Die nach außen gebördelte Zone 7 bildet in Bezug auf die Mittenachse 9 einen asymmetrisch ausgestellten Ausschüttrand mit Abrisskante, wobei die radiale Breite der nach außen gebördelten Zone von der schmalsten Stelle 15 zu der breitesten Stelle 13 kontinuierlich entlang des Umfangs der Schüssel 1 zunimmt. Der breitere Bereich 13 des ausgestellten Schüttrandes 7 ist so bemessen, dass er als Griffabschnitt für Einhandbedienung der Schüssel benutzt werden kann.

Wie oben schon erläutert, erlaubt der Schüttrand mit variierender Breite auch ein bequemes dosiertes Ausgießen von Flüssigkeiten unterschiedlicher Viskositäten, wobei zähflüssigere Medien vorzugsweise über den breiteren Bereich bei 13 ausgeschüttet werden sollten, da dieser Bereich 13 hierfür günstige Bedingungen bietet, wohingegen dünnflüssige Medien über den schmalen Bereich 15 ausgeschüttet werden sollten, da dieser Bereich 15 hierfür optimale Bedingungen bietet.

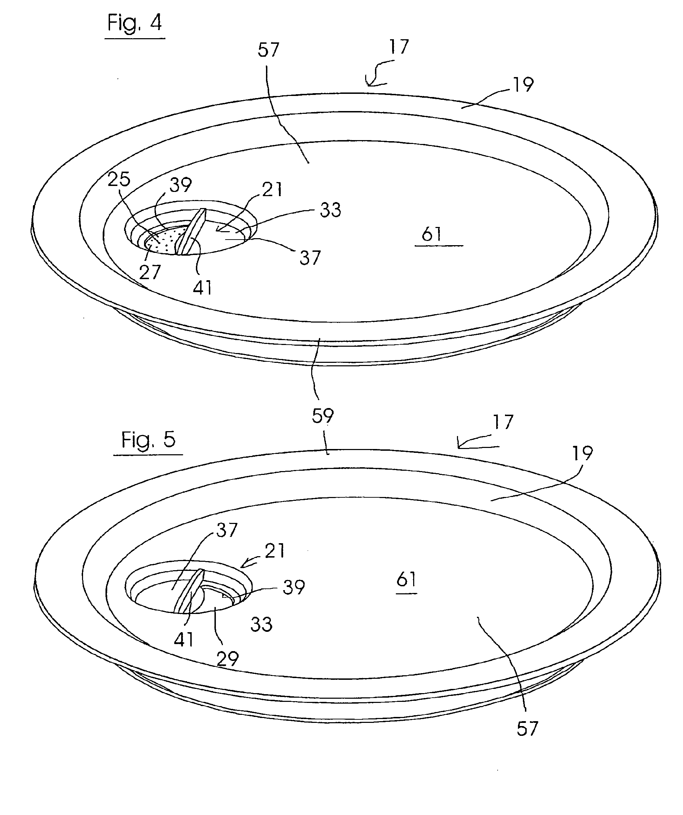

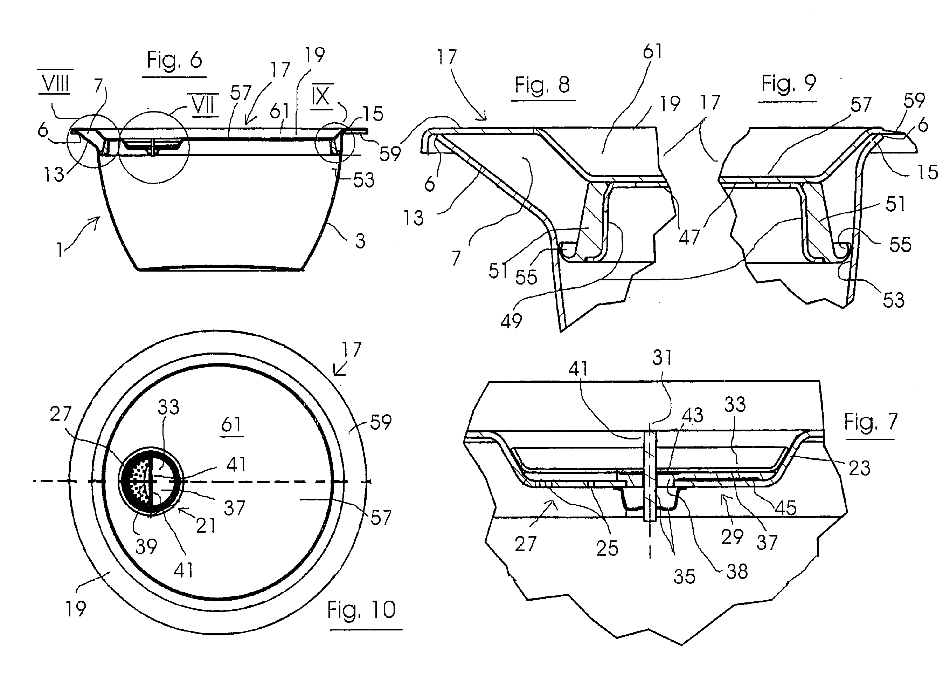

Die Schüssel 1 kann mit einem Deckel 17 gemäß Fig. 4 - Fig. 10 kombiniert werden, wie dies in der Vertikalschnittdarstellung gemäß Fig. 6 zu sehen ist.

Der Deckel 17 umfasst eine Deckelplatte 19 mit einem einstellbaren Belüftungsventil 21. Wie insbesondere aus der Vertikalschnittdarstellung gemäß Fig. 7 zu erkennen ist, weist das Belüftungsventil 21 eine Einprägung oder Vertiefung 23 in der Deckelplatte 19 auf. Diese Vertiefung 23 ist in Draufsicht kreisförmig, wobei eine Kreishälfte (in den Figuren links bei 27) perforiert ist und mithin eine Vielzahl an kleinen Durchgangslöchern 25 aufweist. Die andere Kreishälfte (in den Figuren bei 29) der Vertiefung 23 weist keine Perforation auf. Die Vertiefung 23 bildet eine Aufnahme für ein um die Zentralachse 31 der Vertiefung drehbares Ventilschließelement 33, welches mittels einer abgedichteten Drehlageranordnung 35 in der Schließelementaufnahme 23 drehbar gelagert ist. Vorzugsweise ist die Drehlageranordnung 35 so gestaltet, dass sie ein einfaches Auseinanderbauen des Belüftungsventils 21 zu Reinigungszwecken ermöglicht.

Das Ventilschließelement 33 umfasst eine Kreisscheibe 37, welche in einer Kreishälfte wenigstens ein relativ großes Loch 39 aufweist. Diese gelochte Kreishälfte der Scheibe 37 grenzt in etwa an einen nach oben abstehenden Griffsteg 41 an, der sich über dem Durchmesser der Kreisscheibe 37 erstreckt. Die andere Kreishälfte der Scheibe 37 weist keine Perforation auf. Durch Drehen des Ventilschließelements 33 um seine Drehachse 31 kann die gelochte Hälfte der Kreisscheibe 37 in Flucht mit dem perforierten Bereich 27 der Ventilschließelementaufnahme 23 gebracht werden, wie dies in Fig. 4 und Fig. 10 zu erkennen ist. Damit ist das Ventilschließelement 33 in der Maximalöffnungsstellung und es kann Luftaustausch zwischen dem Inneren der Schüssel 1 und dem Äußeren der Schüssel 1 durch die Perforationslöcher 25 erfolgen.

Aus der Maximalöffnungsstellung gemäß Fig. 4 heraus kann das Ventilschließelement 33 in die Schließstellung gemäß Fig. 5 verdreht werden, in der die Scheibe 37 den perforierten Bereich 27 der Schließelementaufnahme 23 abdichtend überlappt. Das Innere der mit dem Deckel abgedeckten Schüssel 1 ist dann im Wesentlichen luftdicht gegenüber dem Äußeren abgedichtet. Wie aus Fig. 7 zu ersehen ist, kann an dem Ventilschließelement 33 wenigstens eine Elastomerdichtung 38 vorgesehen sein, welche die Dichtwirkung noch erhöht. Mit 43, 45 sind in Fig. 7 freigeschnittene Bereiche gekennzeichnet, die zur Reibungsverminderung vorgesehen sind.

Der Griffabschnitt 41 steht nicht über den oberen Rand der Vertiefung 23 nach oben ab, so dass er beim Stapeln keine Störkontur bilden kann.

Wie aus den Fig. 6, 8 und 9 zu erkennen ist, weist die Deckelplatte 19 an ihrer die Deckelunterseite definierenden Plattenseite 47 eine Dichtungshalterung 49 in Form eines Halterungsringes auf, an dem ein Elastomerdichtungsring 51 auswechselbar gehalten ist. Der Dichtungsring 51 ist so dimensioniert, dass er bei der in Fig. 6 - 9 gezeigten bestimmungsgemäßen Anordnung des Deckels 17 auf der Schüssel 1 an der Innenumfangsfläche 53 der Schüssel 1 umlaufend dichtend anliegt. Vorzugsweise hat der Elästomerdichtungsring 51 eine radial nach außen abstehende Dichtungslippe 55, die sich umlaufend an die Innenumfangsfläche 53 der Schüssel 1 in der in Fig. 8 und Fig. 9 erkennbaren Weise anschmiegt.

Der Deckel 17 hat einen das Belüftungsventil 21 enthaltenden radial inneren Deckelplattenbereich 57 und einen relativ dazu nach oben versetzten, radial äußeren Randsaumbereich 59, mit dem er gemäß Fig. 6 - 9 auf der Schüssel 1 auf deren oberen Schüsselrand 6 aufliegt. Der radial äußere Randsaumbereich 59 bildet somit mit dem radial inneren Deckelplattenbereich 57 eine Mulde 61, welche den Boden einer gleichartigen weiteren Schüssel beim Stapeln aufnehmen kann.

An seinem radial äußeren Rand ist der Randsaumbereich 59 des Deckels 17 umlaufend nach unten hin gekröpft, um den oberen Rand 6 der Schüssel 1 radial außen zu übergreifen.

## Patentansprüche

1. Gefäß, insbesondere Schüssel für Koch-, Anricht-, Aufbewahrungsoder/und Servierzwecke, mit einer steilen Umfangswand (3), die im Bereich ihres den oberen Gefäßrand (6) aufweisenden Endes in eine nach außen gebördelte Zone (7) geringerer Steilheit übergeht, **dadurch gekennzeichnet, dass** die Größe der nach außen gebördelten Zone (7), insbesondere deren in Draufsicht von oben betrachtete radiale Breite, entlang des Umfangs des Gefäßes (1) variiert.

2. Gefäß nach Anspruch 1, **dadurch gekennzeichnet, dass** sich die nach außen gebördelte Zone (7) variierender Größe in Gefäßumfangsrichtung über mehr als die Hälfte der Umfangslänge des Gefäßes (1), insbesondere über die gesamte Umfangslänge erstreckt.

3. Gefäß nach Anspruch 1 oder 2, **dadurch gekennzeichnet, dass** die Größe der nach außen gebördelten Zone (7), insbesondere deren - in Draufsicht von oben betrachtete - radiale Breite, entlang des Umfangs des Gefäßes durchgehend kontinuierlich variiert.

4. Gefäß nach einem der vorhergehenden Ansprüche, **dadurch gekennzeichnet, dass** die nach außen gebördelte Zone (7) - in jedem vertikalen Radial-Längsschnitt betrachtet - näherungsweise geradlinig nach außen verläuft.

5. Gefäß nach Anspruch 4, **dadurch gekennzeichnet, dass** die nach außen gebördelte Zone (7)- in jedem vertikalen Radial-Längsschnitt betrachtet - im Wesentlichen die gleiche Steilheit aufweist.

6. Gefäß nach einem der Ansprüche 1 bis 4, **dadurch gekennzeichnet, dass** die Steilheit der nach außen gebördelten Zone (7) variiert.

7. Gefäß nach einem der vorhergehenden Ansprüche, **dadurch gekennzeichnet, dass** die nach außen gebördelte Zone (7) in Bezug auf eine vertikale Mittenebene (II) des Gefäßes symmetrisch ist.

8. Gefäß nach Anspruch 7, **dadurch gekennzeichnet, dass** die vertikale Mittenebene (II) die nach außen gebördelte Zone (7) - jeweils in Draufsicht von oben betrachtet - an deren radial breitester Stelle (13) und an deren radial schmalster Stelle (15) schneidet.

9. Gefäß nach Anspruch 8, **dadurch gekennzeichnet, dass** die radiale Breite der nach außen gebördelten Zone (7) von der schmalsten Stelle (15) zu der breitesten Stelle (13) kontinuierlich entlang des Umfangs des Gefäßes (1) zunimmt.

10. Gefäß nach einem der vorhergehenden Ansprüche, **dadurch gekennzeichnet, dass** das Gefäß (1) unterhalb der nach außen gebördelten Zone (7) in Bezug auf eine Mittenachse (9) rotationssymmetrisch ist, wobei auch die äußere Randkontur (6) der nach außen gebördelten Zone rotationssymmetrisch ist und in Draufsicht einen Kreis beschreibt, dessen Zentrum (11) jedoch relativ zu der Mittenachse (9) seitlich versetzt ist.

11. Gefäß nach einem der vorhergehenden Ansprüche, **dadurch gekennzeichnet, dass** es aus Edelstahl gebildet ist.

12. Deckel für ein Gefäß, insbesondere für ein Gefäß (1) nach einem der vorhergehenden Ansprüche, umfassend eine Deckelplatte (19) und ein einstellbares Belüftungsventil (21) an der Deckelplatte (19), **dadurch gekennzeichnet, dass** das Belüftungsventil (21) ein Ventilschließelement (33) aufweist, das zwischen einer Schließstellung und einer Maximalöffnungsstellung in einer Schließelementaufnahme (23) bewegbar geführt ist, die wenigstens eine perforierte Belüftungszone (25, 27) aufweist, wobei das Ventilschließelement (33) in dessen Schließstellung die Belüftungszone (25, 27) abdichtend überlappt, und wobei das Ventilschließelement (33) aus der Schließstellung heraus mit Abnahme des Grades der Überlappung in seine Maximalöffnungsstellung bewegbar ist, in der es die perforierte Belüftungszone (25, 27) weitestgehend freigibt.

13. Deckel nach Anspruch 12, **dadurch gekennzeichnet, dass** das Ventilschließelement (33) um eine Drehachse (31) drehbar in der Schließelementaufnahme (23) gehalten ist und durch Drehen um die Drehachse (31) zwischen der Schließstellung und der Maximalöffnungsstellung bewegbar ist.

14. Deckel nach Anspruch 12 oder 13, **dadurch gekennzeichnet, dass** die Schließelementaufnahme (23) eine Vertiefung in der Deckelplatte (19) umfasst, in der das Ventilschließelement (33) so aufgenommen ist, dass es nicht über den oberen Rand der Vertiefung (23) nach außen absteht.

15. Deckel nach einem der Ansprüche 12 bis 14, **dadurch gekennzeichnet, dass** die Perforation der Belüftungszone (25, 27) durch eine Vielzahl kleiner Löcher (25) realisiert ist, deren Durchmesser kleiner als 1,7 mm, vorzugsweise kleiner als 1 mm ist.

16. Deckel nach einem der Ansprüche 12 bis 15, **dadurch gekennzeichnet, dass** die Belüftungszone Subbereiche unterschiedlicher Perforationsgrade aufweist, die in der Schließstellung des Ventilschließelementes von diesem abdichtend überlappt sind und bei Bewegung des Ventilschließelementes in die Maximalöffnungsstellung nacheinander freigegeben werden.

17. Deckel nach einem der Ansprüche 12 bis 16, **dadurch gekennzeichnet, dass** das Ventilschließelement (33) wenigstens ein Elastomerdichtungselement (38) aufweist, um die Belüftungszone (25, 27) in der Schließstellung des Ventilschließelementes (33) luftdicht nach außen hin abzuschließen.

18. Deckel nach einem der Ansprüche 12 bis 17, **dadurch gekennzeichnet, dass** die Deckelplatte (19) an ihrer die Deckelunterseite definierenden Plattenseite (47) eine Dichtungshalterung (49) und einen daran insbesondere auswechselbar angeordneten Elastomerdichtungsring (51) aufweist, der so dimensioniert ist, dass er bei bestimmungsgemäßer Anordnung des Deckels (17) auf dem Gefäß (1) an der Innenumfangsfläche (53) des Gefäßes (1) umlaufend dichtend anliegt.

19. Deckel nach einem der Ansprüche 12 bis 18, **dadurch gekennzeichnet, dass** er einen das Belüftungsventil (21) enthaltenden radial inneren Deckelplattenbereich (57) und einen relativ dazu nach oben versetzten, radial äußeren Randsaumbereich (59) aufweist, mit dem er bei bestimmungsgemäßer Anordnung des Deckels (17) auf dem Gefäß (1) auf dem oberen Gefäßrand (6) aufliegt.

20. Set aus einem Gefäß (1) nach einem der Ansprüche 1 bis 11 und einem Deckel (17) nach einem der Ansprüche 12 bis19.

21. Set nach Anspruch 20 mit einem Deckel nach Anspruch 19, **dadurch gekennzeichnet, dass** das Gefäß (1) auf den Deckel (17) aufsetzbar und dabei mit seinem Boden in die von dem radial äußeren Randsaumbereich (59) des Deckels (17) umlaufend begrenzte, den radial inneren Deckelplattenbereich (57) enthaltende Vertiefung (61) einsetzbar ist.
